# EUROPEAN PATENT APPLICATION

(11) **EP 4 738 808 A1**
(43) Date of publication of application: **06.05.2026**
(21) Application number: 25175600.3
(22) Date of filing: 12.05.2025
(51) Int. Cl.: H04N 1/00, B41F 33/00, G06F 3/12, G06T 7/00

(54) **INSPECTION APPARATUS, PROGRAM, DISPLAY SYSTEM, AND DISPLAY APPARATUS**

(30) Priority: 30.10.2024 JP 2024190980
(71) Applicant: FUJIFILM Business Innovation Corp., Minato-ku Tokyo (JP)
(72) Inventor: ISHIKAWA, Shogo, Yokohama-shi, Kanagawa (JP); KIKUMOTO, Takashi, Yokohama-shi, Kanagawa (JP); OHIRA, Yoshie, Yokohama-shi, Kanagawa (JP); OHKAWA, Kazuhiro, Yokohama-shi, Kanagawa (JP)
(74) Representative: Becker Kurig & Partner Patentanwälte mbB

(57) **Abstract**

An inspection apparatus includes a processor configured to: display a first text string decoded from an inspection region of an image obtained by scanning a printed matter, in a first region on a check screen for an inspection result; and read out document data corresponding to the inspection region from a storage region and display the document data as a second text string in a second region adjacent to the first region.

## Description

### BACKGROUND OF THE INVENTION

### (i) Field of the Invention

The present invention relates to an inspection apparatus, a program, a display system, and a display apparatus.

### (ii) Description of Related Art

There may be no regularity between pages in a barcode printed on paper or a sequence of text strings decoded from the barcode. In this case, a user needs to check that the text string decoded from the printed barcode is correct.

### SUMMARY OF THE INVENTION

However, a list used for checking these text strings is prepared by a separate medium. The comparison of the text strings between separately prepared lists involves a heavy burden in terms of work. In addition, the burden in terms of work increases in proportion to the number of the text strings and the number of digits of the text strings.

An object of the present invention is to provide a technique for reducing a burden required for checking a defect, as compared with a case where a text string decoded from a printed matter and a text string given as a correct answer are compared with each other between different media.

According to a first aspect of the present disclosure, there is provided an inspection apparatus including: a processor configured to: display a first text string decoded from an inspection region of an image obtained by scanning a printed matter, in a first region on a check screen for an inspection result; and read out document data corresponding to the inspection region from a storage region and display the document data as a second text string in a second region adjacent to the first region.

According to a second aspect of the present invention, in the inspection apparatus according to the first aspect, the processor may be configured to: control a display aspect of the first text string in accordance with a result of verification between the first text string and the document data.

According to a third aspect of the present invention, in the inspection apparatus according to the second aspect, the processor may be configured to: display the first text string of the inspection region in which a defect is found by the verification, in association with a first symbol indicating the defect.

According to a fourth aspect of the present invention, in the inspection apparatus according to any one of the first to third aspects, the processor may be configured to: display inspection results of a plurality of pages constituting the printed matter on the check screen in a list format.

According to a fifth aspect of the present invention, in the inspection apparatus according to the fourth aspect, the processor may be configured to: display a page including the inspection region in which a defect is found by verification, by assigning a second symbol indicating the defect.

According to a sixth aspect of the present invention, in the inspection apparatus according to any one of the first to fifth aspects, the processor may be configured to: control display of the check screen in accordance with a condition received through an operation performed by a user.

According to a seventh aspect of the present invention, in the inspection apparatus according to the sixth aspect, the condition may be display of only a page including the inspection region in which a defect is found by verification.

According to an eighth aspect of the present invention, in the inspection apparatus according to the sixth aspect, the condition may be a page in which both the document data corresponding to the inspection region and the first text string decoded from the inspection region are present.

According to a ninth aspect of the present invention, in the inspection apparatus according to the sixth aspect, the condition may be rearrangement of a display order of pages in the check screen to an actual printing order of the printed matter.

According to a tenth aspect of the present invention, in the inspection apparatus according to the sixth aspect, the condition may be parallel display of a print image of the document data corresponding to the inspection region and an image of a scan image corresponding to the inspection region.

According to an eleventh aspect of the present invention, in the inspection apparatus according to the sixth aspect, the condition may be superimposed display of the inspection region on an image of a scan image corresponding to the inspection region.

According to a twelfth aspect of the present invention, in the inspection apparatus according to any one of the first to eleventh aspects, a pattern encoding the second text string may be printed in the inspection region of the printed matter.

According to a thirteenth aspect of the present invention, in the inspection apparatus according to the twelfth aspect, the pattern appearing in the inspection region may have no regularity between consecutive pages.

According to a fourteenth aspect of the present invention, in the inspection apparatus according to the twelfth aspect, the second text string may have no regularity between consecutive pages.

According to a fifteenth aspect of the present invention, in the inspection apparatus according to any one of the first to eleventh aspects, the document data may be text file data in which a value and an item are separated by a comma.

According to a sixteenth aspect of the present disclosure, there is provided a program causing a computer to implement: a function of displaying a first text string decoded from an inspection region of an image obtained by scanning a printed matter, in a first region on a check screen for an inspection result; and a function of reading out document data corresponding to the inspection region from a storage region and displaying the document data as a second text string in a second region adjacent to the first region.

According to a seventeenth aspect of the present disclosure, there is provided a display system including: a processor is configured to: perform control of simultaneously displaying, on a display screen, a first text string read from a printed matter printed based on print data and a second text string included in document data that is data different from the print data and that is input from a user, and a verification result that is a result of verification between the first text string and the second text string.

According to an eighteenth aspect of the present disclosure, there is provided a display apparatus including: a processor is configured to: read an image obtained by scanning a printed matter and generate a first text string based on read information; and display the first text string and a second text string that is separately read, side by side and further display information on a determination of whether or not the text strings match each other.

According to a nineteenth aspect of the present disclosure, there is provided an inspection apparatus that inspects image data read from a printed matter, the inspection apparatus including: an extraction section that extracts information on an inspection region of the image data; an inspection section that inspects the information extracted by the extraction section; and a display section that displays the information extracted by the extraction section after the inspection via the inspection section is completed, in which the display section displays information input by a user as document data and the extracted information in a comparable manner.

According to the first aspect of the present disclosure, a burden required for checking a defect may be reduced as compared with a case where a text string decoded from a printed matter and a text string given as a correct answer are compared with each other between different media.

According to the second aspect of the present disclosure, the check of the presence or absence of the defect may be facilitated.

According to the third aspect of the present disclosure, the check of the inspection region with the defect may be facilitated.

According to the fourth aspect of the present disclosure, the inspection results of the plurality of pages may be checked in a list.

According to the fifth aspect of the present disclosure, the check of the page including the inspection region with the defect may be facilitated.

According to the sixth aspect of the present disclosure, the user may be supported in checking the inspection result.

According to the seventh aspect of the present disclosure, the page with the defect may be efficiently checked.

According to the eighth aspect of the present disclosure, a page with any missing part may be excluded.

According to the ninth aspect of the present disclosure, the founding of the page with the defect from the printed matter may be facilitated.

According to the tenth aspect of the present disclosure, the check through the comparison between two images may be supported.

According to the eleventh aspect of the present disclosure, a deviation between a printing position and the inspection region on the page may be easily checked.

According to the twelfth aspect of the present disclosure, the check of the inspection result related to a quality of the pattern may be facilitated.

According to the thirteenth aspect of the present disclosure, the efficiency of the checking work of the text string in which the text-by-text comparison is required may be improved.

According to the fourteenth aspect of the present disclosure, the efficiency of the checking work of the text string in which the text-by-text comparison is required may be improved.

According to the fifteenth aspect of the present disclosure, the efficiency of the checking work of the text string in the data in which the burden of the visual comparison is large may be improved.

According to the sixteenth aspect of the present disclosure, the burden required for checking the defect may be reduced as compared with a case where the text string decoded from the printed matter and the text string given as the correct answer are compared with each other between different media.

According to the seventeenth aspect of the present disclosure, the burden required for checking the defect may be reduced as compared with a case where the text string decoded from the printed matter and the text string given as the correct answer are compared with each other between different media.

According to the eighteenth aspect of the present disclosure, the burden required for checking the defect may be reduced as compared with a case where the text string decoded from the printed matter and the text string given as the correct answer are compared with each other between different media.

According to the nineteenth aspect of the present disclosure, the burden required for checking the defect may be reduced as compared with a case where the text string decoded from the printed matter and the text string given as the correct answer are compared with each other between different media.

### BRIEF DESCRIPTION OF THE DRAWINGS

Exemplary embodiment(s) of the present invention will be described in detail based on the following figures, wherein:
Fig. 1 is a diagram showing a configuration example of a printed matter inspection system assumed in an exemplary embodiment;
Fig. 2 is a diagram showing a configuration example on hardware of an inspection apparatus used in the exemplary embodiment;
Fig. 3 is a diagram showing a functional configuration example of the inspection apparatus used in the exemplary embodiment;
Fig. 4 is a diagram showing a setting example of an inspection region;
Fig. 5 is a diagram showing an example of a check screen for an inspection result;
Fig. 6 is an example of a flowchart showing a processing operation executed by the inspection apparatus;
Fig. 7 is a diagram showing a display example of a management screen for a print job;
Fig. 8 is a diagram showing a display example of a selection screen for correct answer data;
Fig. 9 is a diagram showing a check screen on which all inspection results corresponding to a print job are displayed;
Fig. 10 is a diagram showing a check screen on which only defective pages among the inspection results corresponding to the print job are displayed;
Fig. 11 is a diagram showing a check screen on which only pages in which both the inspection result and the correct answer data are present are displayed;
Fig. 12 is a diagram showing a check screen on which display is rearranged in a physical printing order;
Fig. 13 is a diagram showing a check screen on which a reference image and a scan image are parallel-displayed in an image display field;
Fig. 14 is a diagram showing a check screen on which the inspection region is displayed in a superimposed manner on the scan image; and
Fig. 15 is a diagram showing a display example of an information box that appears in response to a mouse-over on the inspection region.

### DETAILED DESCRIPTION OF THE INVENTION

Hereinafter, exemplary embodiments of the present invention will be described with reference to the accompanying drawings.

### <Exemplary Embodiment 1>

### <System Configuration>

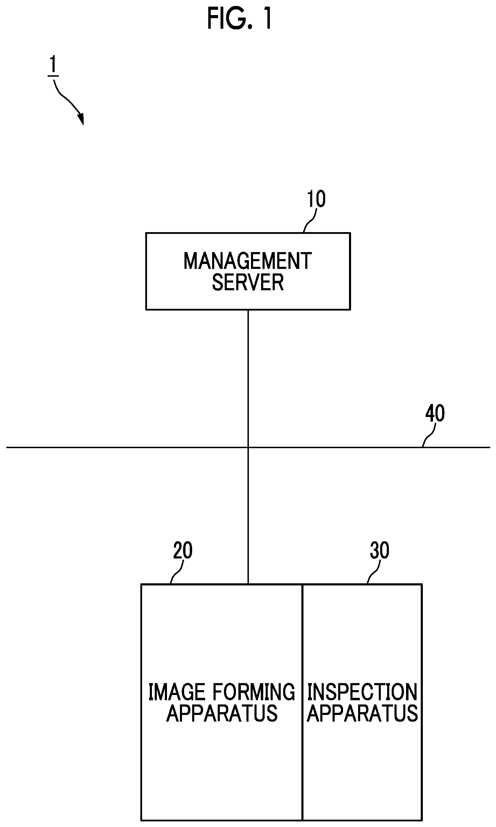

Fig. 1 is a diagram showing a configuration example of a printed matter inspection system 1 assumed in the exemplary embodiment. The printed matter inspection system 1 includes a management server 10, an image forming apparatus 20, an inspection apparatus 30, and a network 40. In the present exemplary embodiment, the network 40 is a local area network (LAN). The LAN may be either a wired line or a wireless line. However, the network 40 may be either a dedicated line or a mobile communication system, such as 4G or 5G.

The management server 10 is a computer that manages a print job. The print job is a unit of print processing, and is also a unit of management. The management server 10 supplies print data corresponding to the print job to the image forming apparatus 20. The print data is page description language (PDL) data.

The image forming apparatus 20 is an apparatus that forms an image on paper in accordance with the print data. The paper may be either cut paper or roll paper. However, in the present exemplary embodiment, it is assumed that the cut paper is used.

The inspection apparatus 30 is an apparatus that inspects a quality of the printed matter. The printed matter refers to paper on which the image corresponding to the print job output by the image forming apparatus 20 is formed. In the inspection apparatus 30, the presence or absence of defects such as stains and misregistration in an inspection region designated in advance is inspected.

### <Apparatus Configuration>

### <Management Server>

The management server 10 includes a processor, a read-only memory (ROM), a random-access memory (RAM) used as a work area of the processor, an auxiliary storage device, a monitor, and a communication interface. The respective devices are connected via a bus or another signal line.

The processor is a device that implements various functions through execution of a program. The program here is a general term for an operating system (OS) or an application program. For example, the processor provides a management function of the print job to a user through the execution of the program. A management screen for the print job is displayed on the monitor. Various types of information related to the print job being managed are displayed on the management screen. On the management screen, the inspection region can be set for each print job. On the management screen, it is also possible to check an inspection result of the inspection apparatus 30.

The auxiliary storage device is configured with, for example, a hard disk device or a semiconductor storage. The auxiliary storage device stores, for example, the program and the print job. The print job is, for example, PDL data, line conditioned data stream (LCDS) data, intelligent printer data stream (IPDS) data, or portable document format (PDF) data.

The communication interface is used for communication with the image forming apparatus 20, the inspection apparatus 30, and the like.

### <Image Forming Apparatus>

The image forming apparatus 20 includes a processor, a ROM, a RAM used as a work area of the processor, an auxiliary storage device, an image processing unit, a printing unit, and a communication interface. The respective devices are connected via a bus or another signal line. The image forming apparatus 20 is also provided with a mechanism for accommodating paper and a mechanism for transporting paper.

The processor controls an operation of each device through execution of firmware and forms the image corresponding to the print data.

The auxiliary storage device is configured with, for example, a hard disk device or a semiconductor storage. The auxiliary storage device stores the print data received from the management server 10, in addition to the firmware.

The image processing unit executes, for example, processing of converting page description language (PDL) data described in a page description language into raster image processor (RIP) data. For example, the printing unit is a mechanism unit that forms an image on paper using an electrophotographic method or an ink jet method.

The communication interface is used for communication with the management server 10, the inspection apparatus 30, and the like.

### <Inspection Apparatus>

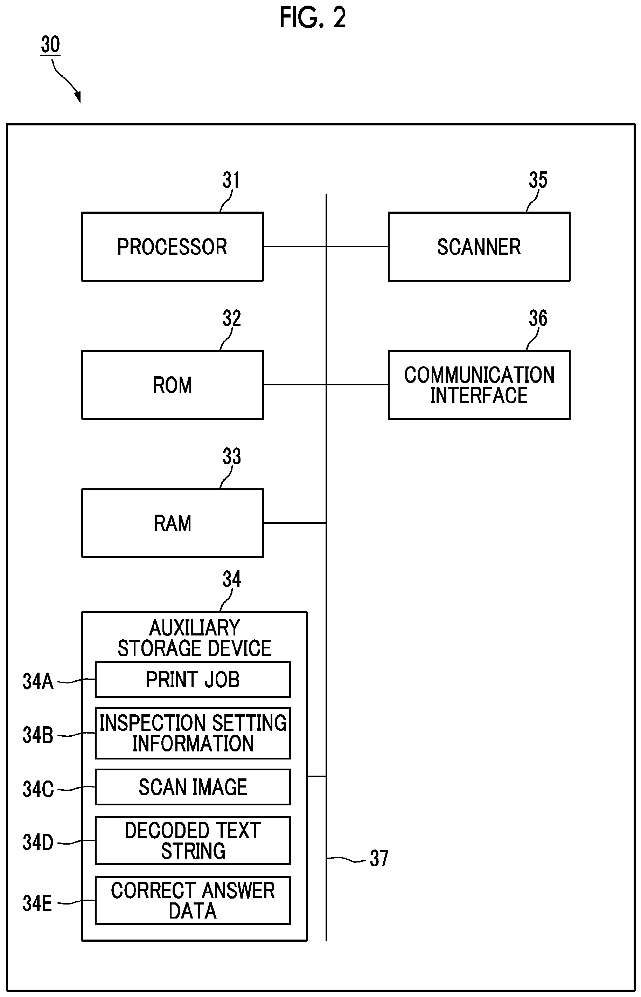

Fig. 2 is a diagram showing a configuration example on hardware of the inspection apparatus 30 used in the exemplary embodiment.

The inspection apparatus 30 includes a processor 31, a ROM 32, a RAM 33 used as a work area of the processor, an auxiliary storage device 34, a scanner 35, and a communication interface 36. The respective devices are connected via a bus or another signal line 37.

The processor 31 inspects a quality of the printed matter through the execution of the firmware.

The auxiliary storage device 34 is configured with, for example, a hard disk device or a semiconductor storage. The auxiliary storage device 34 is an example of a storage region.

In addition to the firmware, the auxiliary storage device 34 stores a print job 34A received from the management server 10, inspection setting information 34B, a scan image 34C, a decoded text string 34D, and correct answer data 34E.

The inspection setting information 34B is setting information for defining the inspection of the printed matter. In the present exemplary embodiment, the inspection setting information 34B is set through the management screen displayed on the monitor of the management server 10 (see Fig. 1).

However, in a case where the inspection apparatus 30 is provided with a monitor, the inspection setting information 34B is set through a setting screen displayed on the monitor of the inspection apparatus 30. In a case where the image forming apparatus 20 is provided with a monitor, the inspection setting information 34B may be set through a setting screen displayed on the monitor of the image forming apparatus 20.

The inspection setting information 34B includes coordinates of a region to be inspected (hereinafter, referred to as an "inspection region") and other information.

The scan image 34C is an image obtained by scanning the printed matter.

The decoded text string 34D is a text string decoded from the inspection region of the scan image 34C. A text string, a barcode, and a quick response (QR) code (registered trademark) are printed in the inspection region.

However, in a case of the present exemplary embodiment, it is assumed that a number is printed in the inspection region.

Therefore, the decoded text string 34D in the present exemplary embodiment is a text string read by optical character recognition (OCR). The decoded text string 34D may be a text string obtained by decoding the barcode, the QR code, or the like.

The decoded text string 34D is accompanied by information for specifying the page (for example, a page number) and information for specifying the inspection region in the page (for example, a region number).

**In** the present exemplary embodiment, the decoded text string 34D is described in a comma separated values (CSV) format. That is, the decoded text string 34D is text file data in which a value or an item are separated by a comma. The decoded text string 34D is an example of a first text string.

The correct answer data 34E is a text string corresponding to the inspection region in the document data. The correct answer data 34E in the present exemplary embodiment is also described in the CSV format.

**In** a case of the present exemplary embodiment, the inspection apparatus 30 manages the document data and the correct answer data 34E, but the management server 10 (see Fig. 1) may manage the document data and the correct answer data 34E. In this case, the inspection apparatus 30 reads out the document data and the correct answer data 34E and records the document data and the correct answer data 34E in the auxiliary storage device 34. The correct answer data 34E is an example of a second text string.

The scanner 35 is a device that optically reads an image of a surface of paper, and outputs the image as image data. The optically read image corresponds to the above-described "scan image". The scanner 35 is provided on a paper transport path. In a case of the present exemplary embodiment, the reading of the image using the scanner 35 is executed immediately after the image is formed by the image forming apparatus 20.

The communication interface 36 is used for communication with the management server 10, the image forming apparatus 20, and the like.

### <Functional Configuration>

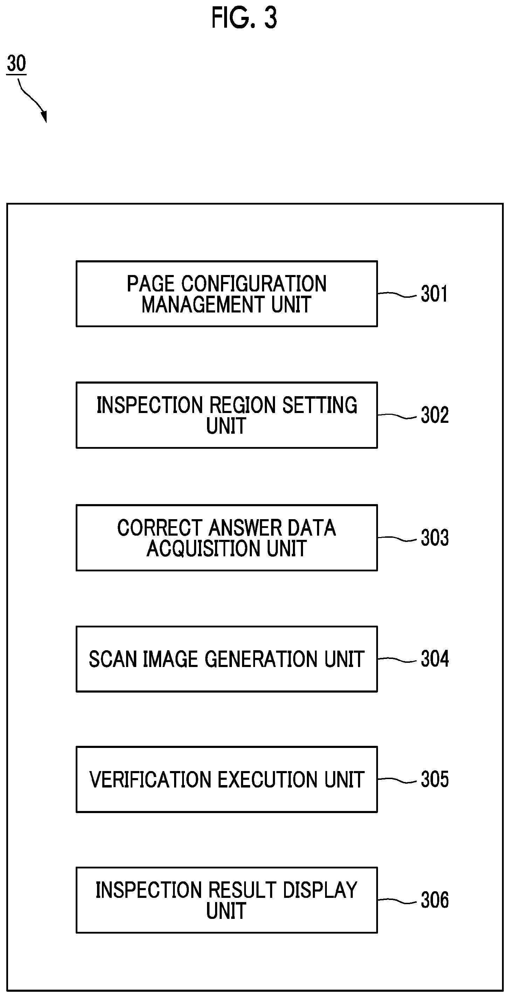

Fig. 3 is a diagram showing a functional configuration example of the inspection apparatus 30 used in the exemplary embodiment. The functional units shown in Fig. 3 are implemented through the execution of the firmware by the processor 31 (see Fig. 2).

Fig. 3 shows, as the functional units of the inspection apparatus 30, a page configuration management unit 301, an inspection region setting unit 302, a correct answer data acquisition unit 303, a scan image generation unit 304, a verification execution unit 305, and an inspection result display unit 306.

The page configuration management unit 301 is a functional unit that manages information on each page constituting the print job 34A (see Fig. 2) and the inspection result of each page. The information on each page includes, for example, information on the inspection region determined for each page. In a case of the present exemplary embodiment, the barcode is printed in the inspection region. The page configuration management unit 301 also has a function of instructing the verification execution unit 305 to execute the inspection.

The inspection region setting unit 302 is a functional unit that determines the coordinates of the inspection region on the page. In a case where a designation of the inspection region is received through a setting screen (not shown), the inspection region setting unit 302 sets the corresponding coordinates.

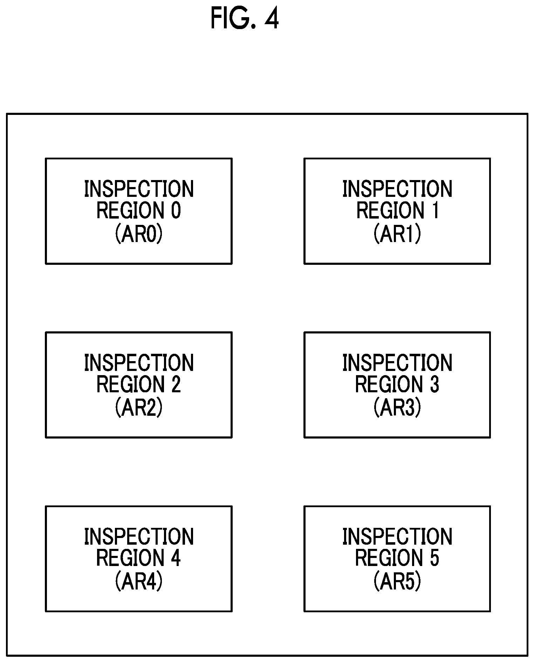

Fig. 4 is a diagram showing a setting example of the inspection region. In a case of Fig. 4, six inspection regions 0 to 5 are set in one page. In the present exemplary embodiment, the inspection regions 0 to 5 are also referred to as AR0 to AR5.

In a case of Fig. 4, the six "inspection region 0" to "inspection region 5" are set in three stages on one page. The "inspection region 0" is set on the left side of the first row from the top, and the "inspection region 1" is set on the right side thereof. The "inspection region 2" is set on the left side of the second row from the top, and the "inspection region 3" is set on the right side thereof. The "inspection region 4" is set on the left side of the third row from the top, and the "inspection region 5" is set on the right side thereof.

In a case of the present exemplary embodiment, the "inspection region 0", the "inspection region 1", the "inspection region 2", and the "inspection region 4" are used for readability inspection. In the readability inspection, whether or not the reading as the barcode can be correctly performed is inspected.

The "inspection region 3" is used for front and back inspection. In the front and back inspection, whether or not the text string decoded from the barcode on the front surface matches the text string decoded from the barcode on the back surface is inspected.

The "inspection region 5" is used for serial number inspection. In the serial number inspection, whether or not there is continuity in the text string between pages is inspected.

The correct answer data acquisition unit 303 (see Fig. 3) is a functional unit that acquires the correct answer data from the document data corresponding to the print job. The document data is provided as a data file in the CSV format. The correct answer data is given as text, a number, a symbol, or another text string.

The scan image generation unit 304 is a functional unit that acquires the scan image of each page from the scanner 35 (see Fig. 2). The scan image generation unit 304 generates a new scan image each time a new page is brought into the scanner 35.

The verification execution unit 305 (see Fig. 3) is a functional unit that verifies the text string decoded from the scan image corresponding to each inspection region and the text string of the correct answer data corresponding to the text string. The verification here is also referred to as a quality inspection of the printed matter. The text string decoded from the scan image is an example of a first text string. The text string of the correct answer data is an example of a second text string.

The verification execution unit 305 outputs a verification result obtained for each inspection region to the page configuration management unit 301, as the inspection result. The verification result is classified into, for example, "match" and "mismatch". In addition, the verification result may include information indicating the reliability of "match" and "mismatch".

The inspection result display unit 306 (see Fig. 3) is a functional unit that displays the inspection result of the print job on the monitor. In a case of the present exemplary embodiment, the inspection result display unit 306 displays a check screen for the inspection result on the monitor of the management server 10 (see Fig. 1). This check screen is displayed as a part of the management screen for the print job.

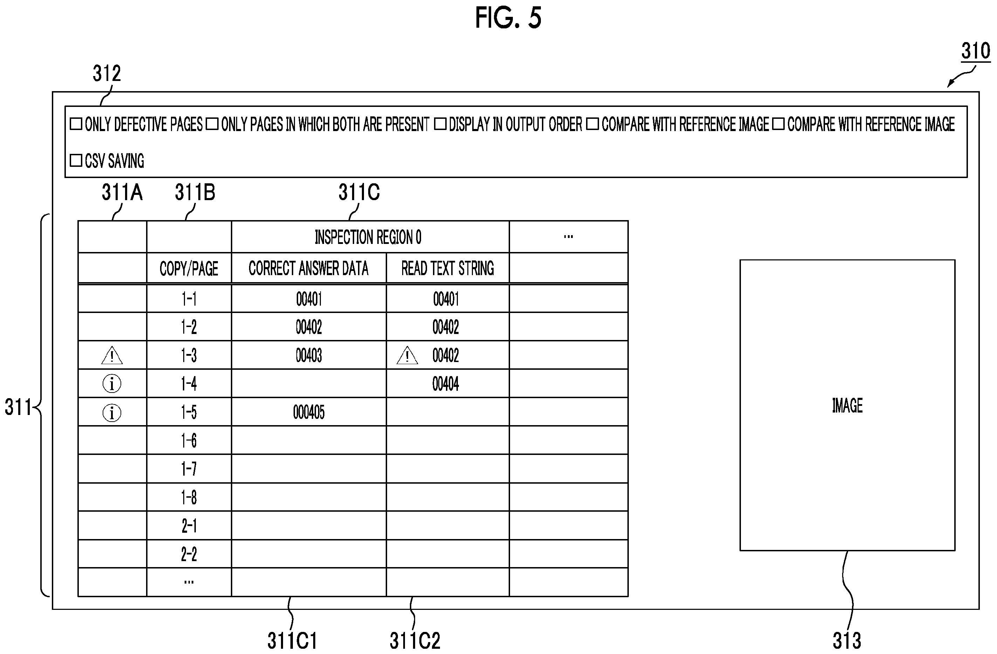

Fig. 5 is a diagram showing an example of a check screen 310 for the inspection result. The check screen 310 shown in Fig. 5 is composed of a display field 311 for the inspection result, an operation reception field 312, and an image display field 313.

The display field 311 for the inspection result shown in Fig. 5 displays the inspection results of a plurality of pages constituting the printed matter in a list format. In a case of Fig. 5, each row corresponds to an individual page. In a case of Fig. 5, each column is provided with an information field 311A, a copy/page field 311B, and a text string field 311C in a direction from a left end to a right end. The text string field 311C is displayed in the same number as the number of the inspection regions. In Fig. 5, for the convenience of the paper surface, only the text string field 311C corresponding to the "inspection region 0" is displayed, and the text string fields 311C corresponding to the "inspection region 1" to "inspection region 5" are not displayed.

In the information field 311A, a symbol indicating a page in which an error is included in the inspection result is displayed. In a case of Fig. 5, an information mark (that is, a mark composed of i and a circle) and a caution mark (that is, a mark composed of a triangle and an exclamation mark) are displayed. The caution mark is an example of a first symbol indicating the defect.

In a case of the present exemplary embodiment, the information mark is displayed on a page including the inspection region in which the correct answer data is missing or a page including the inspection region in which the text string decoded from the scan image is not present. In a case of Fig. 5, the information mark is displayed on the pages "1-4" and "1-5". Here, "1-4" means page "4" of the "first" copy. The information mark is an example of a second symbol indicating the defect.

The correct answer data of "1-4" is originally supposed to be "00404", but is missing. Therefore, the information mark is displayed in the information field 311A corresponding to "1-4".

In the correct answer data of "1-5", "00405" is present, but the text string decoded from the scan image is not present. Therefore, the information mark is displayed in the information field 311A corresponding to "1-5".

In a case of the present exemplary embodiment, the caution mark is displayed on the page including the inspection region in which the text string decoded from the scan image does not match the correct answer data. In a case of Fig. 5, the caution mark is displayed on the page of "1-3".

The read text string corresponding to "1-3" is originally "00403", but is "00402". Therefore, the caution mark is displayed in both the information field 311A corresponding to "1-3" and the read text string.

The copy/page field 311B indicates which copy and which page of the printed matter the page belongs to. In a case of Fig. 5, the copy and the page are indicated as"1-1", "1-2", and the like. The first number indicates which copy the page belongs to, and the second number indicates which page number the page belongs to in the copy. Accordingly, the page corresponding to "1-1" is the "first" page of the "first" copy.

The text string field 311C is composed of a correct answer data field 311C1 and a read text string field 311C2. As shown in Fig. 5, the correct answer data field 311C1 and the read text string field 311C2 are adjacent to each other.

The correct answer data field 311C1 is an example of a second region. The read text string field 311C2 is an example of a first region. Therefore, the first region and the second region are adjacent to each other.

The correct answer data (that is, a text string) of the corresponding inspection region is displayed in the correct answer data field 311C1 on each page. In a case of Fig. 5, "00401" is displayed as the correct answer data on the page indicated by "1-1".

The text string read from (that is, decoded from) the corresponding barcode is displayed in the read text string field 311C2. In a case of Fig. 5, "00401" is displayed as the read text string on the page shown in "1-1".

In a case of the pages corresponding to "1-1" and "1-2", the read text string matches the correct answer data. Therefore, the caution mark is not displayed in the read text string field 311C2 corresponding to "1-1" and "1-2".

In a case of the page corresponding to "1-3", the text string decoded from the barcode does not match the correct answer data. Therefore, the caution mark is displayed in the read text string field 311C2.

The display of the caution mark in the read text string field 311C2 is an example of control of a display aspect of the read text string.

The display of the information mark or the caution mark described above is an example of control performed by the inspection result display unit 306 (see Fig. 3) in accordance with the result of verification between the read text string and the correct answer data.

The operation reception field 312 (see Fig. 5) is used for receiving a condition used for controlling the display of the display field 311 for the inspection result. Specifically, the operation reception field 312 is used for receiving an instruction regarding display or saving of the inspection result.

In a case of Fig. 5, three check boxes are disposed in the operation reception field 312 (see Fig. 5). One check box is used for narrowing down the number of pages to be displayed in the display field 311 for the inspection result. Another check box is used for an instruction of the display aspect of the image display field 313 (see Fig. 5). The other check box is a button for saving the inspection result.

**In** a case where the button for saving the inspection result is operated, the content displayed on the check screen 310 for the inspection result is saved as, for example, a CSV format file.

**In** a case of Fig. 5, as the check boxes used for narrowing down the number of pages, "only defective pages", "only pages in which both are present", and "display in output order" are prepared.

**In** a case of Fig. 5, "compare with reference image" is prepared as the check box used for the instruction of the display aspect of the image display field 313.

An image of each page is displayed in the image display field 313 (see Fig. 5). In a case where the check box of the "compare with reference image" is in a non-selected state, only the scan image of the page selected by the user is displayed. In a case where the check box of the "compare with reference image" is in a selected state, the scan image and the reference image of the page selected by the user are displayed.

The reference image is a print image of the document data. The reference image can be generated by rasterizing the print data corresponding to the document data.

### <Processing Operation of Inspection Apparatus>

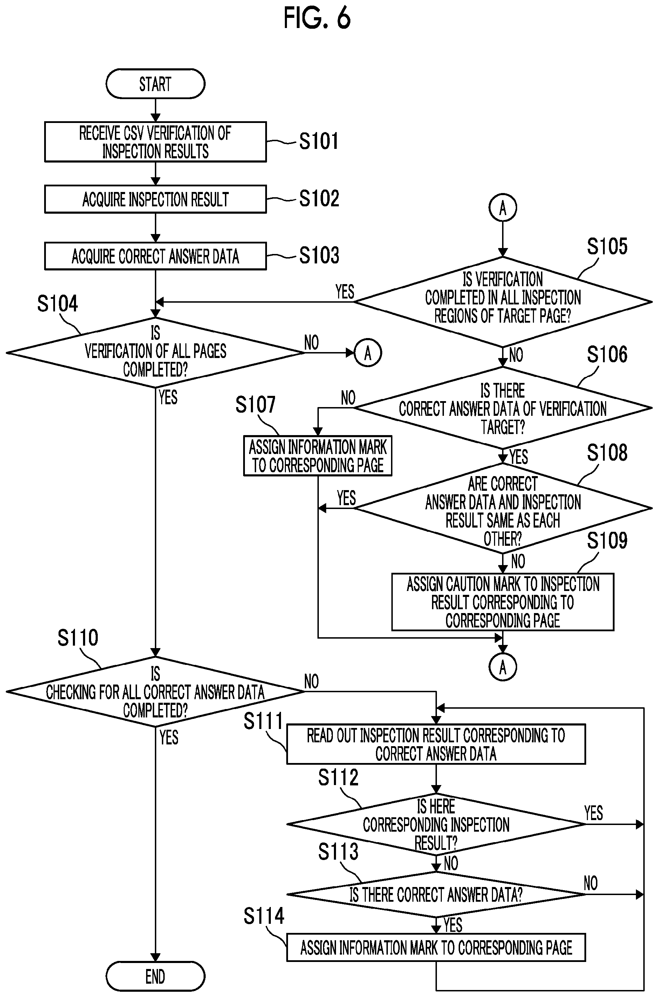

Fig. 6 is an example of a flowchart showing a processing operation executed by the inspection apparatus 30 (see Fig. 1). In Fig. 6, a "step" is represented by a symbol S.

The processing operation shown in Fig. 6 is implemented through the execution of the program via the processor 31 (see Fig. 2). In other words, the processing operation shown in Fig. 6 is implemented by cooperation of the functional units shown in Fig. 3.

First, the inspection apparatus 30 receives the CSV verification of the inspection results through the management screen for the print job (step S101).

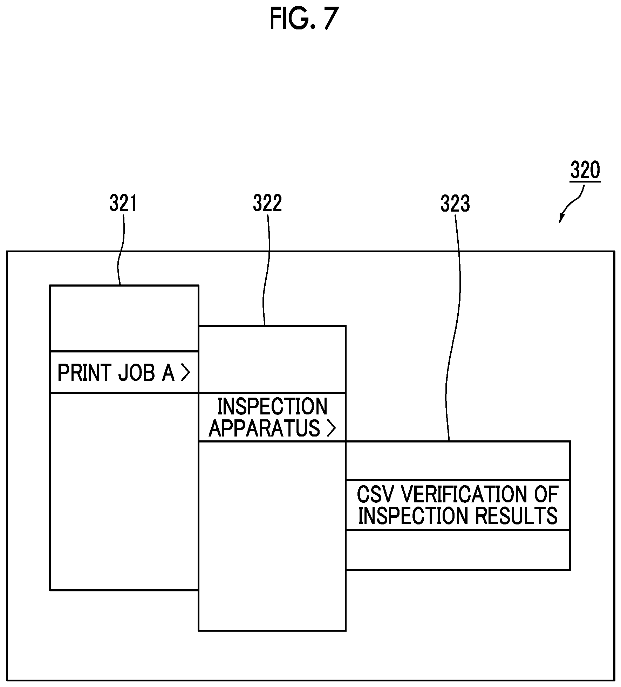

Fig. 7 is a diagram showing a display example of a management screen 320 for the print job. The management screen 320 shown in Fig. 7 is provided with a selection field 321 for the print job, a pull-down menu 322 of a first layer, and a pull-down menu 323 of a second layer. The pull-down menu 322 of the first layer corresponds to the print job selected in the selection field 321 for the print job. The pull-down menu 323 of the second layer corresponds to the item selected in the pull-down menu 322.

In the selection field 321 for the print job, file names of the managed print jobs are displayed in a list. In a case of Fig. 7, a "print job A" is selected.

In the pull-down menu 322 of the first layer, the instructions and other items for the "print job A" are displayed in a list. For example, "print start", "proof print", "interrupt print", "delete", "copy", "folder movement", "inspection apparatus", "job saving", "job transfer", and the like are displayed in the pull-down menu 322 of the first layer. In Fig. 7, the "inspection apparatus" is selected.

In the pull-down menu 323 of the second layer, the instructions for the inspection apparatus 30 and other items are displayed in a list. For example, "check inspection region", "display inspection result", "save report", "save read inspection result", and "CSV verification of read inspection results" are displayed in the pull-down menu 323 of the second layer. In Fig. 7, "CSV verification of read inspection results" is selected.

The inspection apparatus 30 that has received the instruction from the user acquires the inspection result related to the print job A (step S102). The inspection result here is the text string decoded from the scan image corresponding to the inspection region of each page. The inspection result is read out from, for example, the auxiliary storage device 34 (see Fig. 2).

Next, the inspection apparatus 30 acquires the correct answer data (step S103). In the present exemplary embodiment, the correct answer data is acquired from the management server 10 (see Fig. 1). As described above, the document data corresponding to the print job is recorded as the correct answer data in the management server 10. The correct answer data may be acquired from a server (for example, a database) (not shown) connected to the network 40.

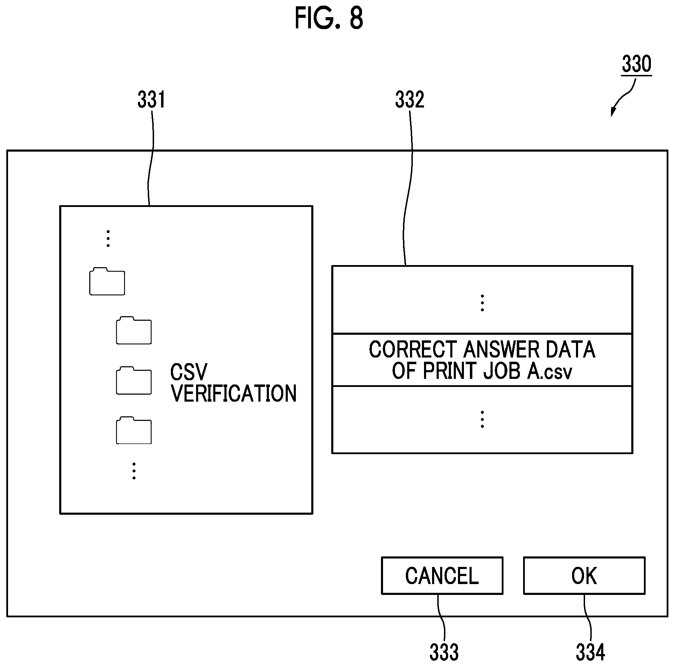

Fig. 8 is a diagram showing a display example of a selection screen 330 for the correct answer data. A folder display field 331, a file list 332, a "cancel" button 333, and an "OK" button 334 are provided on the selection screen 330 shown in Fig. 8.

In the folder display field 331, the folders are displayed hierarchically. In a case of Fig. 8, a folder with a folder name "CSV verification" is selected.

In the file list 332, file names saved in the folder selected in the folder display field 331 are displayed in a list. In Fig. 8, "correct answer data of print job A.csv" is selected.

In a case where the "cancel" button 333 is operated, the selection operation is released. In a case where the "OK" button 334 is operated, the selection operation is confirmed.

Fig. 6 will be referred to again.

In a case where the inspection result and the correct answer data are acquired, the inspection apparatus 30 determines whether or not the verification of all the pages is completed (step S104).

In a case where the verification is completed on all the pages, a positive result is obtained in step S104. In this case, the inspection apparatus 30 proceeds to step S110.

On the other hand, in a case where there is a page in which the verification is not completed, a negative result is obtained in step S104. In this case, the inspection apparatus 30 determines whether or not the verification is completed in all the inspection regions of the target page (step S105). In other words, the inspection apparatus 30 determines whether or not the verification of all the inspection regions in the page being verified is completed.

In a case where the verification is completed in all the inspection regions of the target page, a positive result is obtained in step S105. In this case, the inspection apparatus 30 returns to step S104.

On the other hand, in a case where there is an inspection region in which the verification is not completed on the target page, a negative result is obtained in step S105. In this case, the inspection apparatus 30 determines whether or not there is correct answer data to be verified (step S106).

In a case where the correct answer data is not present, a negative result is obtained in step S106. In this case, the inspection apparatus 30 assigns the information mark to the corresponding page (step S107), and then returns to step S105.

In a case where the correct answer data is present, a positive result is obtained in step S106. In this case, the inspection apparatus 30 determines whether or not the correct answer data and the inspection result are the same as each other (step S108).

In a case where the correct answer data and the inspection result are the same as each other, a positive result is obtained in step S108. In this case, the inspection apparatus 30 returns to step S105.

On the other hand, in a case where the correct answer data and the inspection result are different from each other, a negative result is obtained in step S108. In this case, the inspection apparatus 30 assigns the caution mark to the inspection result corresponding to the corresponding page (step S109), and then returns to step S105.

In a case where the verification of all the pages is completed (positive result in step S104), the inspection apparatus 30 determines whether or not the checking for all the correct answer data is completed (step S110).

In a case where the checking for all the correct answer data is completed, a positive result is obtained in step S110. In this case, the inspection apparatus 30 completes the series of processing operations.

On the other hand, in a case where the checking for all the correct answer data is not completed, a negative result is obtained in step S110. In this case, the inspection apparatus 30 reads out the inspection result corresponding to the correct answer data (step S111).

Next, the inspection apparatus 30 determines whether or not there is a corresponding inspection result (step S112). This determination is intended to find the inspection region in which the text string is not decoded.

In a case where the corresponding inspection result is present, a positive result is obtained in step S112. In this case, the inspection apparatus 30 returns to step S110.

On the other hand, in a case where the corresponding inspection result is not present, a negative result is obtained in step S112. In this case, the inspection apparatus 30 determines whether or not the correct answer data is present (step S113). This determination is intended to check the reason why the decoded text string is not present in the inspection region.

In a case where the correct answer data is not present, a negative result is obtained in step S113. In this case, the reason why the decoded text string is not present in the inspection region, which is the inspection target, means that the correct answer data is not present. This case is not abnormal. Therefore, the inspection apparatus 30 returns to step S110.

On the other hand, in a case where the correct answer data is present, a positive result is obtained in step S113. This case means that there is a problem in printing the barcode in the corresponding inspection region. In this case, the inspection apparatus 30 assigns the information mark to the corresponding page (step S114), and then returns to step S110.

### <Check Screen for Inspection Result>

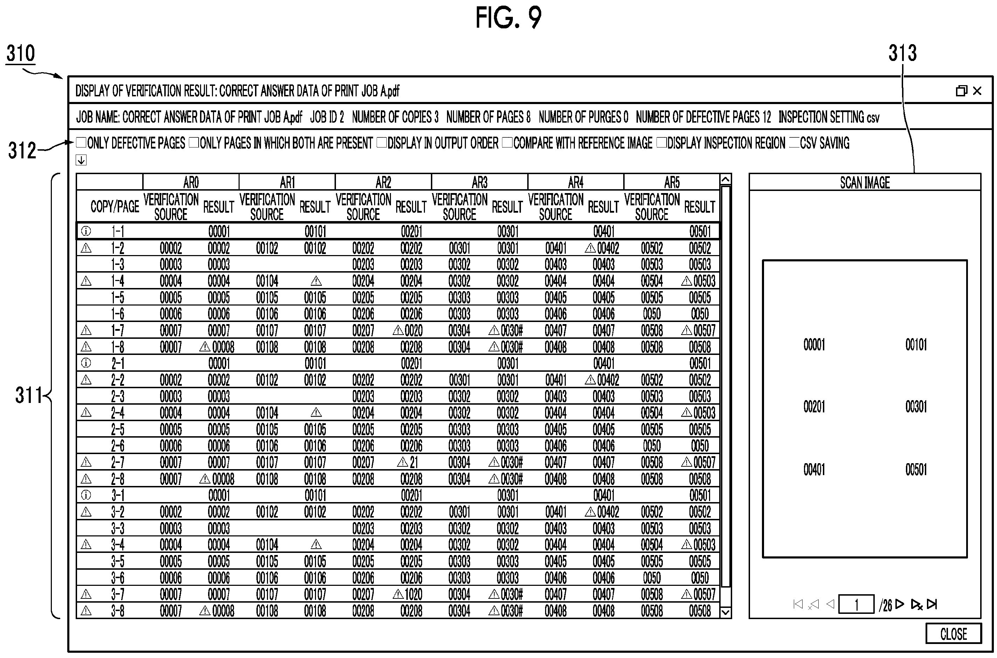

Hereinafter, a screen change due to an operation on the check screen 310 for the inspection result (see Fig. 5) will be described with reference to Figs. 9 to 16.

Fig. 9 is a diagram showing the check screen 310 on which all the inspection results corresponding to the print job are displayed.

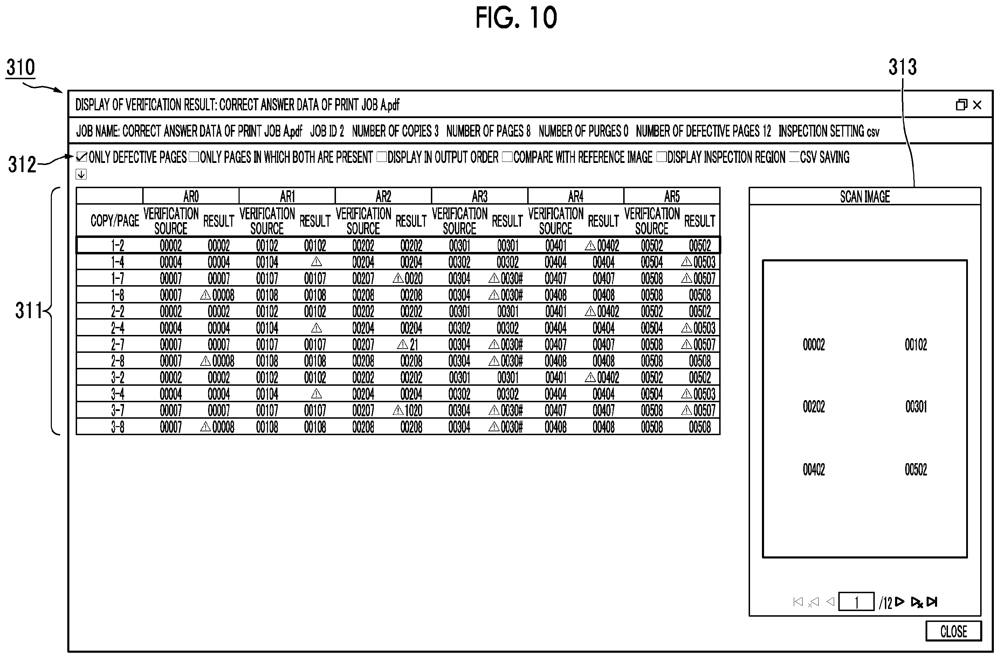

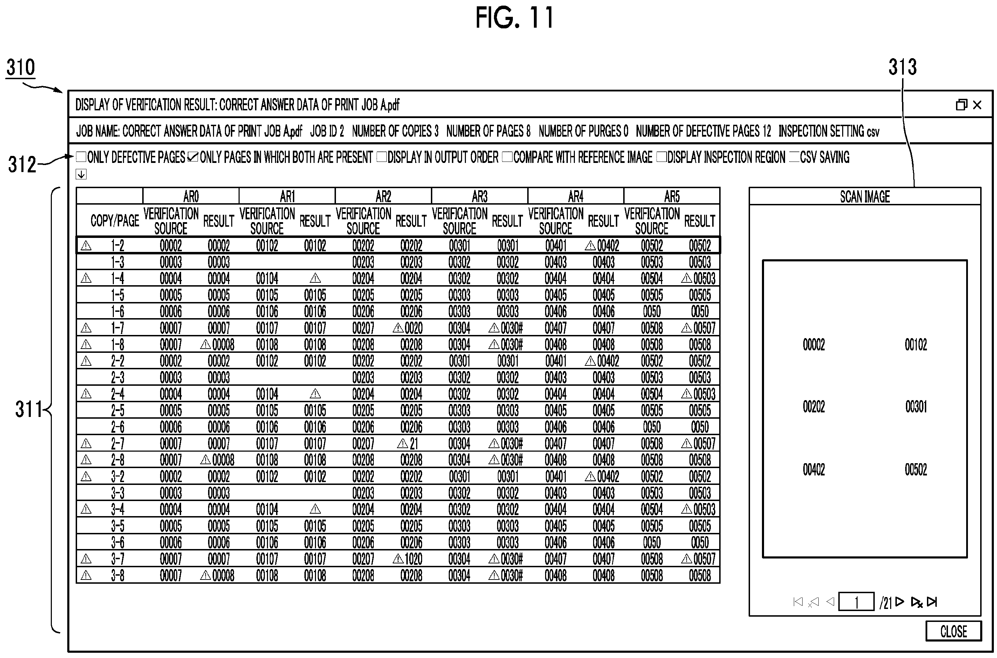

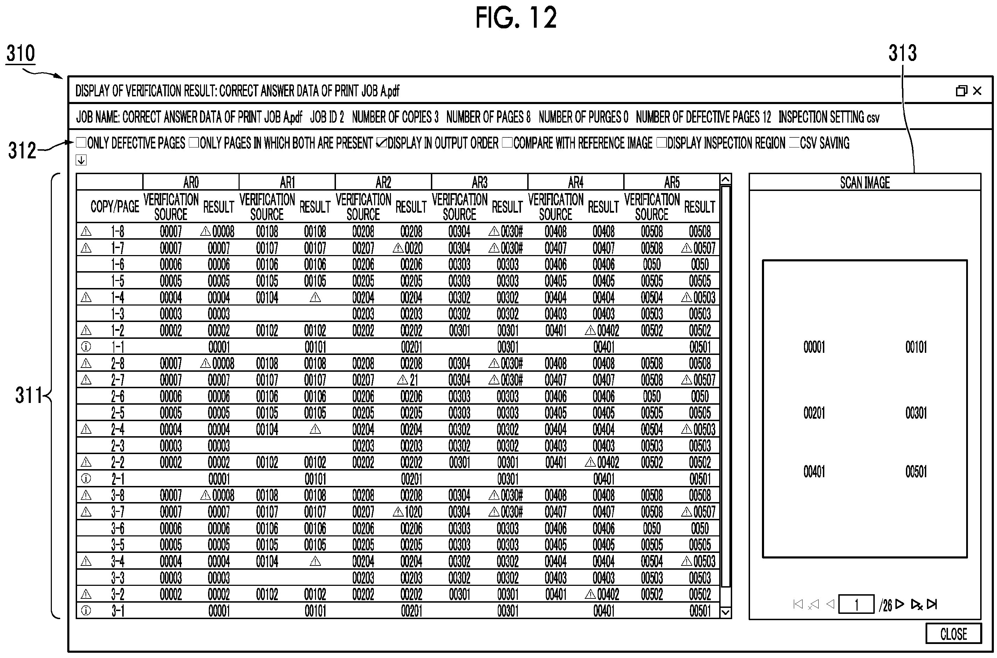

Fig. 10 is a diagram showing the check screen 310 on which only defective pages among the inspection results corresponding to the print job are displayed. Fig. 11 is a diagram showing the check screen 310 on which only pages in which both the inspection result and the correct answer data are present are displayed. Fig. 12 is a diagram showing the check screen 310 on which display is rearranged in a physical printing order.

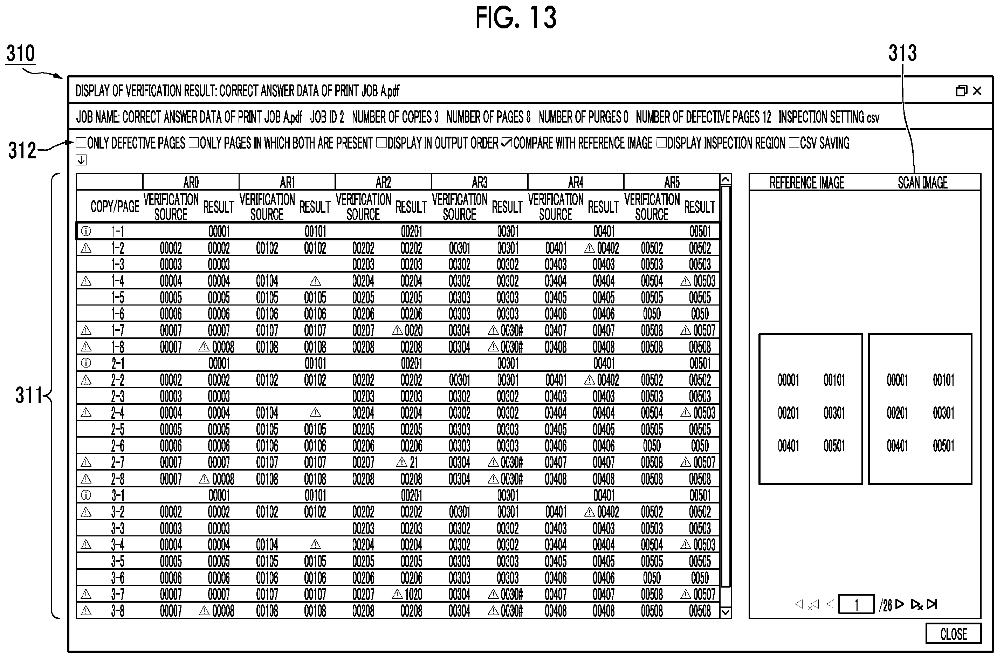

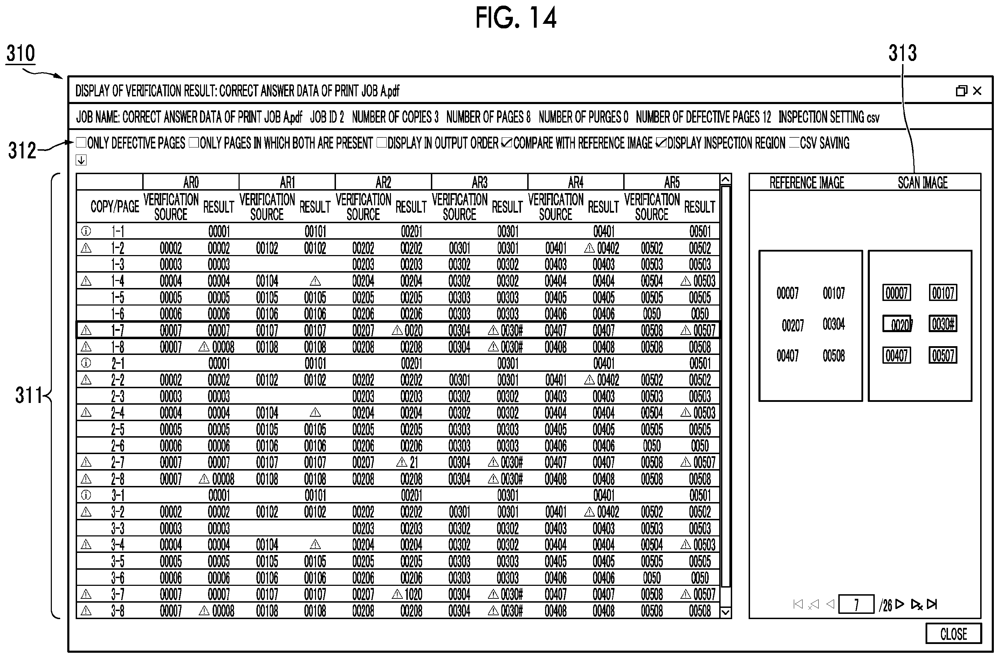

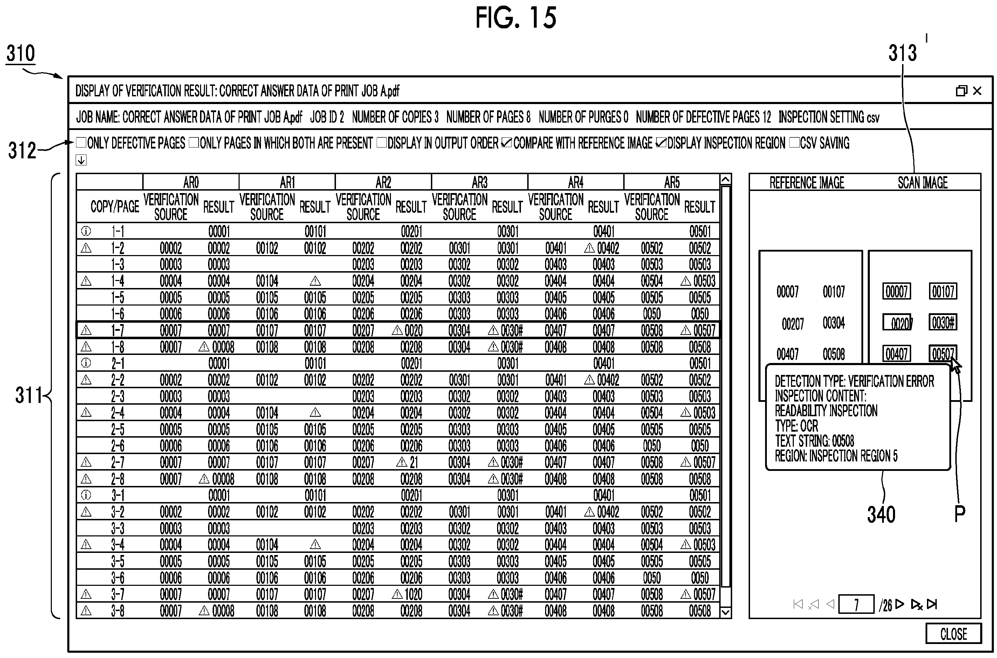

Fig. 13 is a diagram showing the check screen 310 on which a reference image and a scan image are parallel-displayed in an image display field 313. Fig. 14 is a diagram showing the check screen 310 on which the inspection region is displayed in a superimposed manner on the scan image. Fig. 15 is a diagram showing a display example of an information box 340 that appears in response to a mouse-over on the inspection region.

Parts in Figs. 9 to 15 corresponding the parts in Fig. 5 are designated by corresponding reference numerals. However, in Figs. 9 to 15, a title of the "correct answer data" in each inspection region is denoted as a "verification source", and a title of the "read text string" is denoted as a "result".

### <Display Example 1>

A "display example 1" corresponds to the check screen 310 shown in Fig. 9.

In a case of the check screen 310 shown in Fig. 9, all the check boxes in the operation reception field 312 are in a non-selected state.

Therefore, all the inspection results corresponding to the print job are displayed on the check screen 310. In the display field 311 for the inspection result, six "inspection regions 0" to "inspection region 5" are displayed.

There is no correct answer data on the page "1-1" of Fig. 9. Therefore, the information mark is displayed at the beginning of the corresponding row.

In addition, in the "inspection region 4" on the page "1-2" of Fig. 9, the read text string is different from the correct answer data. Therefore, the caution mark is displayed at both the beginning of the corresponding row and the "inspection region 4".

In a case of Fig. 9, the page "1-1" is selected by the user.

The scan image of the selected page is displayed in the image display field 313. That is, the scan image corresponding to page "1-1" is displayed. In Fig. 9, for convenience of description, the text string decoded from the barcode is described at the position of the barcode in the scan image.

### <Display Example 2>

A "display example 2" corresponds to the check screen 310 shown in Fig. 10.

In a case of the check screen 310 shown in Fig. 10, the "only defective pages" is in a selected state in the operation reception field 312, and the other check boxes are in a non-selected state.

Therefore, only the page including the inspection region in which the mismatch with the correct answer data is detected is displayed on the check screen 310 shown in Fig. 10. Since the "only defective pages" is displayed, the caution mark at the beginning of the row is not displayed.

The display of "only defective pages" reduces the number of pages displayed on the check screen 310, and it is possible to efficiently check only the pages with a problem in printing quality.

### <Display Example 3>

A "display example 3" corresponds to the check screen 310 shown in Fig. 11.

In a case of the check screen 310 shown in Fig. 11, the "only pages in which both are present" is in a selected state in the operation reception field 312, and the other check boxes are in a non-selected state.

Therefore, only the page in which the correct answer data is present and at least one text string can be decoded is displayed on the check screen 310 shown in Fig. 11. Since at least one decoded text string need only be included, an incorrect text string may be decoded, and an inspection region in which the text string cannot be decoded may be present.

Even in this display, the number of pages displayed on the check screen 310 is reduced.

In addition, in a case of this display example, it is also possible to handle a case where the printing quality is inspected only for some of the printed matters of the print job. For example, the original number of pages of the print job is 20 pages, but the inspection is performed from the first page to the tenth page by the inspection apparatus 30 (see Fig. 1). In this case, it is possible to exclude the eleventh page to the twentieth page from the display target.

### <Display Example 4>

A "display example 4" corresponds to the check screen 310 shown in Fig. 12.

In a case of the check screen 310 shown in Fig. 12, the "display in output order" is in a selected state in the operation reception field 312, and the other check boxes are in a non-selected state.

In a cases of the above-described "display example 1" to "display example 3", the display field 311 for the inspection result is displayed in the page arrangement order of the document data.

On the other hand, Fig. 12 shows a case where the output of the page is in the opposite direction during printing. Therefore, the arrangement of the pages is the actual output order such as "1-8", "1-7", "1-6", and the like.

In this way, by matching the arrangement on the display with the arrangement of the actual printed matter, it is easy to find a target page from the printed matter.

### <Display Example 5>

A "display example 5" corresponds to the check screen 310 shown in Fig. 13.

In a case of the check screen 310 shown in Fig. 13, the "compare with reference image" is in a selected state in the operation reception field 312, and the other check boxes are in a non-selected state.

Therefore, both the reference image and the scan image are displayed in the image display field 313 shown in Fig. 13. In a case of Fig. 13, for convenience of description, the text string as the correct answer data is described at the position of the barcode in the reference image.

In a case of this display example, the user can check the printing quality not only by comparing the decoded text string with the correct answer data on the screen but also by comparing the actual printed matter with the reference image.

### <Display Example 6>

A "display example 6" corresponds to the check screen 310 shown in Fig. 14.

In a case of the check screen 310 shown in Fig. 14, the "compare with reference image" and the "display of inspection region" are in a selected state in the operation reception field 312, and the other check boxes are in a non-selected state.

Therefore, in a case of the check screen 310 shown in Fig. 14, as in the check screen 310 shown in Fig. 13, both the reference image and the scan image are displayed in the image display field 313.

In the image display field 313, the reference image and the scan image corresponding to the page "1-7" are displayed.

In a case of Fig. 14, the barcode corresponding to "00207" is printed at the position corresponding to the "inspection region 2" of the scan image. However, there is a deviation between the printing position of the barcode and the position of the "inspection region 2". Therefore, the text string decoded from the scan image corresponding to the "inspection region 2" is "0020", which is different from "00207" of the correct answer data.

In a case of Fig. 14, since the inspection region is displayed to be superimposed on the scan image, it is possible to check the cause of the caution mark. That is, it is possible to notice that the deviation of the printing position is a problem.

### <Display Example 7>

A "display example 7" corresponds to the check screen 310 shown in Fig. 15.

The display content of the check screen 310 shown in Fig. 15 is basically the same as the display content of the check screen 310 shown in Fig. 14.

However, on the check screen 310 shown in Fig. 15, a mouse pointer P is superimposed on the inspection region at the lower right position of the scan image. That is, the mouse pointer P is placed over the inspection region at the lower right position of the scan image.

On the check screen 310 shown in Fig. 15, the information box 340 is displayed as a result of the mouse-over. In Fig. 15, the description content of the information box 340 is shown in an enlarged manner. The information box 340 describes that a "detection type" is a verification error, an "inspection content" is a readability inspection, a "type" is OCR, a "text string" is "00508", and a "region" is the "inspection region 5".

The text string decoded from the printed barcode is "00508", but the corresponding correct answer data is "00507".

By displaying the information box 340 in a mouse-over manner, the user can easily check the mechanical information from the scan image.

### <Summary>

As described above, in the inspection apparatus 30 (see Fig. 1) described in the present exemplary embodiment, the corresponding correct answer data (that is, text string) and read text string (that is, decoded text string) are parallel-displayed in adjacent regions on the same screen.

In addition, on the check screen 310 for the inspection result (see Fig. 5) described in the present exemplary embodiment, the defects related to the "inspection region 0" to the "inspection region 5" are displayed by the information mark or the caution mark in units of pages.

In addition, in a case of the present exemplary embodiment, the caution mark is displayed in the text string field 311C (see Fig. 5) of the check screen 310 for the inspection result for the read text string that does not match the correct answer data.

### <Other Exemplary Embodiments>

(1) While the exemplary embodiment of the present invention has been described above, the technical scope of the present invention is not limited to the scope of the above-described exemplary embodiment. According to the claims, the above-described exemplary embodiment to which various modifications or improvements are added also falls within the technical scope of the present invention.
(2) In the above-described exemplary embodiment, in a case where a defect is found, as shown in Fig. 5, the caution mark is assigned to the read text string and displayed.
   However, the fact that the defect is found may be expressed by, for example, a change in font, a change in font size, a change in display color, or other display aspects.
(3) In the above-described exemplary embodiment, the information mark and the caution mark are used differently depending on the type of the defect, but the same mark may be displayed.
(4) In the above-described exemplary embodiment, a case where the image forming apparatus 20 and the inspection apparatus 30 are separate housings has been assumed. However, the image forming apparatus 20 and the inspection apparatus 30 may have an integrated configuration.
(5) In the above-described exemplary embodiment, the management server 10 has been described as an independent apparatus. However, the management server 10 may be configured integrally with the image forming apparatus 20 or may be configured integrally with the inspection apparatus 30.
(6) In the above-described exemplary embodiment, a case of inspecting the printing quality of the barcode has been described, but the inspection target may be a QR code or a text string.
(7) The correct answer data 34E described in the above-described exemplary embodiment may or may not have regularity between consecutive pages. The expression "having regularity" means, for example, that text strings are serial numbers between pages or that there is commonality in text strings between pages. The expression "having no regularity" means, for example, that text strings are not serial numbers between pages or that there is no commonality between text strings between pages.
(8) In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments.

The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage).

The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The present invention is also applicable to a program and a program product.

### <Supplementary Note>

(((1))) An inspection apparatus comprising:
   a processor configured to:
   display a first text string decoded from an inspection region of an image obtained by scanning a printed matter, in a first region on a check screen for an inspection result; and
   read out document data corresponding to the inspection region from a storage region and display the document data as a second text string in a second region adjacent to the first region.
(((2))) The inspection apparatus according to (((1))), wherein the processor is configured to:
   control a display aspect of the first text string in accordance with a result of verification between the first text string and the document data.
(((3))) The inspection apparatus according to (((2))), wherein the processor is configured to:
   display the first text string of the inspection region in which a defect is found by the verification, in association with a first symbol indicating the defect.
(((4))) The inspection apparatus according to any one of (((1))) to (((3))), wherein the processor is configured to:
   display inspection results of a plurality of pages constituting the printed matter on the check screen in a list format.
(((5))) The inspection apparatus according to (((4))), wherein the processor is configured to:
   display a page including the inspection region in which a defect is found by verification, by assigning a second symbol indicating the defect.
(((6))) The inspection apparatus according to any one of (((1))) to (((5))), wherein the processor is configured to:
   control display of the check screen in accordance with a condition received through an operation performed by a user.
(((7))) The inspection apparatus according to (((6))),
   wherein the condition is display of only a page including the inspection region in which a defect is found by verification.
(((8))) The inspection apparatus according to (((6))),
   wherein the condition is a page in which both the document data corresponding to the inspection region and the first text string decoded from the inspection region are present.
(((9))) The inspection apparatus according to (((6))),
   wherein the condition is rearrangement of a display order of pages in the check screen to an actual printing order of the printed matter.
(((10))) The inspection apparatus according to (((6))),
   wherein the condition is parallel display of a print image of the document data corresponding to the inspection region and an image of a scan image corresponding to the inspection region.
(((11))) The inspection apparatus according to (((6))),
   wherein the condition is superimposed display of the inspection region on an image of a scan image corresponding to the inspection region.
(((12))) The inspection apparatus according to any one of (((1))) to (((11))),
   wherein a pattern encoding the second text string is printed in the inspection region of the printed matter.
(((13))) The inspection apparatus according to (((12))),
   wherein the pattern appearing in the inspection region has no regularity between consecutive pages.
(((14))) The inspection apparatus according to (((12))),
   wherein the second text string has no regularity between consecutive pages.
(((15))) The inspection apparatus according to any one of (((1))) to (((11))),
   wherein the document data is text file data in which a value and an item are separated by a comma.
(((16))) A program causing a computer to implement:
   a function of displaying a first text string decoded from an inspection region of an image obtained by scanning a printed matter, in a first region on a check screen for an inspection result; and
   a function of reading out document data corresponding to the inspection region from a storage region and displaying the document data as a second text string in a second region adjacent to the first region.
(((17))) A display system comprising:
   a processor is configured to:
   perform control of simultaneously displaying, on a display screen,
   a first text string read from a printed matter printed based on print data and a second text string included in document data that is data different from the print data and that is input from a user, and
   a verification result that is a result of verification between the first text string and the second text string.
(((18))) A display apparatus comprising:
   a processor is configured to:
   read an image obtained by scanning a printed matter and generate a first text string based on read information; and
   display the first text string and a second text string that is separately read, side by side and further display information on a determination of whether or not the text strings match each other.
(((19))) An inspection apparatus that inspects image data read from a printed matter, the inspection apparatus comprising:
   an extraction section that extracts information on an inspection region of the image data;
   an inspection section that inspects the information extracted by the extraction section; and
   a display section that displays the information extracted by the extraction section after the inspection via the inspection section is completed,
   wherein the display section displays information input by a user as document data and the extracted information in a comparable manner.

With the inspection apparatus according to (((1))), a burden required for checking a defect may be reduced as compared with a case where a text string decoded from a printed matter and a text string given as a correct answer are compared with each other between different media.

With the inspection apparatus according to (((2))), the check of the presence or absence of the defect may be facilitated.

With the inspection apparatus according to (((3))), the check of the inspection region with the defect may be facilitated.

With the inspection apparatus according to (((4))), the inspection results of the plurality of pages may be checked in a list.

With the inspection apparatus according to (((5))), the check of the page including the inspection region with the defect may be facilitated.

With the inspection apparatus according to (((6))), the user may be supported in checking the inspection result.

With the inspection apparatus according to (((7))), the page with the defect may be efficiently checked.

With the inspection apparatus according to (((8))), a page with any missing part may be excluded.

With the inspection apparatus according to (((9))), the founding of the page with the defect from the printed matter may be facilitated.

With the inspection apparatus according to (((10))), the check through the comparison between two images may be supported.

With the inspection apparatus according to (((11))), a deviation between a printing position and the inspection region on the page may be easily checked.

With the inspection apparatus according to (((12))), the check of the inspection result related to a quality of the pattern may be facilitated.

With the inspection apparatus according to (((13))), the efficiency of the checking work of the text string in which the text-by-text comparison is required may be improved.

With the inspection apparatus according to (((14))), the efficiency of the checking work of the text string in which the text-by-text comparison is required may be improved.

With the inspection apparatus according to (((15))), the efficiency of the checking work of the text string in the data in which the burden of the visual comparison is large may be improved.

With the program according to (((16))), the burden required for checking the defect may be reduced as compared with a case where the text string decoded from the printed matter and the text string given as the correct answer are compared with each other between different media.

With the display system according to (((17))), the burden required for checking the defect may be reduced as compared with a case where the text string decoded from the printed matter and the text string given as the correct answer are compared with each other between different media.

With the display apparatus according to (((18))), the burden required for checking the defect may be reduced as compared with a case where the text string decoded from the printed matter and the text string given as the correct answer are compared with each other between different media.

With the inspection apparatus according to (((19))), the burden required for checking the defect may be reduced as compared with a case where the text string decoded from the printed matter and the text string given as the correct answer are compared with each other between different media.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: printed matter inspection system
10: management server
20: image forming apparatus
30: inspection apparatus
40: network

## Claims

1. An inspection apparatus comprising:
a processor configured to:
display a first text string decoded from an inspection region of an image obtained by scanning a printed matter, in a first region on a check screen for an inspection result; and
read out document data corresponding to the inspection region from a storage region and display the document data as a second text string in a second region adjacent to the first region.

2. The inspection apparatus according to claim 1, wherein the processor is configured to:
control a display aspect of the first text string in accordance with a result of verification between the first text string and the document data.

3. The inspection apparatus according to claim 2, wherein the processor is configured to:
display the first text string of the inspection region in which a defect is found by the verification, in association with a first symbol indicating the defect.

4. The inspection apparatus according to any one of claims 1 to 3, wherein the processor is configured to:
display inspection results of a plurality of pages constituting the printed matter on the check screen in a list format.

5. The inspection apparatus according to claim 4, wherein the processor is configured to:
display a page including the inspection region in which a defect is found by verification, by assigning a second symbol indicating the defect.

6. The inspection apparatus according to any one of claims 1 to 5, wherein the processor is configured to:
control display of the check screen in accordance with a condition received through an operation performed by a user.

7. The inspection apparatus according to claim 6,
wherein the condition is display of only a page including the inspection region in which a defect is found by verification.

8. The inspection apparatus according to claim 6,
wherein the condition is a page in which both the document data corresponding to the inspection region and the first text string decoded from the inspection region are present.

9. The inspection apparatus according to claim 6,
wherein the condition is rearrangement of a display order of pages in the check screen to an actual printing order of the printed matter.

10. The inspection apparatus according to claim 6,
wherein the condition is parallel display of a print image of the document data corresponding to the inspection region and an image of a scan image corresponding to the inspection region.

11. The inspection apparatus according to claim 6,
wherein the condition is superimposed display of the inspection region on an image of a scan image corresponding to the inspection region.

12. The inspection apparatus according to any one of claims 1 to 11,
wherein a pattern encoding the second text string is printed in the inspection region of the printed matter.

13. The inspection apparatus according to claim 12,
wherein the pattern appearing in the inspection region has no regularity between consecutive pages.

14. The inspection apparatus according to claim 12,
wherein the second text string has no regularity between consecutive pages.

15. The inspection apparatus according to any one of claims 1 to 11,
wherein the document data is text file data in which a value and an item are separated by a comma.

16. A program causing a computer to implement:
a function of displaying a first text string decoded from an inspection region of an image obtained by scanning a printed matter, in a first region on a check screen for an inspection result; and
a function of reading out document data corresponding to the inspection region from a storage region and displaying the document data as a second text string in a second region adjacent to the first region.

17. A display system comprising:
a processor is configured to:
perform control of simultaneously displaying, on a display screen,
a first text string read from a printed matter printed based on print data and a second text string included in document data that is data different from the print data and that is input from a user, and
a verification result that is a result of verification between the first text string and the second text string.

18. A display apparatus comprising:
a processor is configured to:
read an image obtained by scanning a printed matter and generate a first text string based on read information; and
display the first text string and a second text string that is separately read, side by side and further display information on a determination of whether or not the text strings match each other.

19. An inspection apparatus that inspects image data read from a printed matter, the inspection apparatus comprising:
an extraction section that extracts information on an inspection region of the image data;
an inspection section that inspects the information extracted by the extraction section; and
a display section that displays the information extracted by the extraction section after the inspection via the inspection section is completed,
wherein the display section displays information input by a user as document data and the extracted information in a comparable manner.
